# EUROPEAN PATENT APPLICATION

(11) **EP 1 521 103 A1**
(43) Date of publication of application: **06.04.2005**
(21) Application number: 04023590.5
(22) Date of filing: 01.10.2004
(51) Int. Cl.: G02B 1/11

(54) **Anti-reflection film for plasma display front panel and process for producing the same**

(30) Priority: 03.10.2003 JP 2003346086
(71) Applicant: JSR Corporation, Tokyo (JP); HS Planning Limited, Machida-shi, Tokyo (JP)
(72) Inventor: Yuumoto, Yoshiji JSR Corporation, Tokyo (JP); Sugiyama, Naoki JSR Corporation, Tokyo (JP); Eriyama, Yuichi JSR Corporation, Tokyo (JP); Shinohara, Hironobu HS Planning Limited, Machida-shi Tokyo (JP)
(74) Representative: Leson, Thomas Johannes Alois, Dipl.-Ing.

(57) **Abstract**

Disclosed is an anti-reflection film for plasma display front panel, having a hard coating layer, a conductive layer comprising a conductive polymer, a high-refractive index layer and a low-refractive index layer, which are provided in an arbitrary order on at least one surface of a substrate. Also disclosed is a process for producing the anti-reflection film, comprising forming a conductive layer comprising a conductive polymer on a surface of a substrate by gas phase polymerization of a monomer such as thiophene. The anti-reflection film for plasma display front panel of the invention has excellent anti-reflection properties and is excellent in transparency, near infrared ray shielding properties, color tone correction properties and antistatic properties. The process of the invention can produce an anti-reflection film for plasma display front panel having excellent adhesion between the substrate and the conductive layer.

## Description

### FIELD OF THE INVENTION

The present invention relates to an anti-reflection film for plasma display front panel, and more particularly to an anti-reflection film which has excellent anti-reflection properties and is excellent in transparency, near infrared ray shielding properties, color tone correction properties and antistatic properties, and a process for producing the anti-reflection film.

### BACKGROUND OF THE INVENTION

Instead of cathode ray tube televisions, plasma displays of rear projection screen systems having large screens have been put into practical use. To the plasma displays, front panels are frequently fitted for the purpose of protecting the screens, and in order to prevent scratching on the surfaces, protective films having a hard coating layer are often employed.

Further, because the plasma displays have screens of larger size and flatter surface than the conventional cathode ray tube televisions, reflected peripheral environment or people in the screen attributable to much light reflection are observed. Furthermore, if there is reflected external environment in the screen attributable to the light reflection, visibility of an image is markedly lowered because of low luminance. Then, in order to enhance contrast of an image, a film containing a dye or a pigment is sometimes stuck to a transparent resin substrate for constituting the front panel. In this case, however, there is a limit in the amount of the dye or the pigment added because the visible light transmittance is lowered.

On this account, low reflecting properties and high transparency are required for the films for front panels of plasma displays. Moreover, because the screen is large, adhesion of dust due to electrostatic charge is liable to take place when the anti-reflection film it stuck to the front panel, so that excellent antistatic properties are also required.

To meet such requirements, a transparent anti-reflection film obtained by vapor deposition or sputtering has been proposed. In this film, however, there are problems of high cost and poor mass production capability.

On the other hand, there is an anti-reflection film for plasma display front panel having anti-reflection function, which is obtained by a coating method, and Japanese Patent Laid-Open Publication No. 359024/2001 discloses a front panel having, as a film of this type, an anti-reflection film of a laminated structure consisting of a high-refractive index layer obtained by curing a composition containing particles of a metal oxide such as zirconium oxide or antimony oxide and a low-refractive index layer composed of a cured product of an organosilicon compound. In this anti-reflection film, however, there is a problem of a bad balance between transparency and antistatic properties.

It is known that plasma displays release near infrared rays and electromagnetic waves out of the devices in principle. Since the near infrared rays become causes of malfunctions of codeless telephones, remote controllers of infrared ray system, etc., they need to be shielded. Also the electromagnetic waves sometimes exert bad influences on the equipment, and recently, for the reason that there is a possibility of doing harm to the human bodies, regulation by law is being made.

With regard to the electromagnetic wave shielding, a method of using a metal mesh such as a copper mesh or an alternating multi-layer film composed of a metal thin film and a metal oxide such as indium oxide is known. On the other hand, for the purposes of shielding near infrared rays and correcting color tone, a method of dispersing a dye that absorbs near infrared rays in a transparent resin is known. In this method, however, there is a problem of lowering of visible light transmittance.

In order to solve such problems as describe above, the present inventors have earnestly studied, and as a result, they have found that a film having a specific conductive polymer layer has a good balance between the visible light transmittance and the near infrared ray shielding effect, and the color tone can be controlled by the thickness of the conductive polymer layer, and this film has excellent properties as an anti-reflection film for plasma display front panel. Further, the conductive polymer layer has excellent antistatic properties and exhibits excellent handling properties in the production of a plasma display front panel.

### OBJECT OF THE INVENTION

It is an object of the present invention to provide an anti-reflection film which has excellent anti-reflection properties and is excellent in transparency, near infrared ray shielding properties, color tone correction properties and antistatic properties.

### SUMMARY OF THE INVENTION

According to the present invention, the following anti-reflection film for plasma display front panel and the following process for producing the anti-reflection film are provided.
1. An anti-reflection film for plasma display front panel, having a hard coating layer and a conductive layer comprising a conductive polymer on at least one surface of a substrate.
2. An anti-reflection film for plasma display front panel, having a hard coating layer, a conductive layer comprising a conductive polymer, a high-refractive index layer and a low-refractive index layer, which are provided in an arbitrary order on at least one surface of a substrate.
3. The anti-reflection film for plasma display front panel as stated in 1 or 2, wherein the conductive polymer is polythiophene or its derivative.
4. The anti-reflection film for plasma display front panel as stated in any one of 1 to 3, wherein the conductive polymer is polythiophene obtained by gas phase polymerization or its derivative.
5. The anti-reflection film for plasma display front panel as stated in any one of 1 to 4, wherein the conductive layer comprising a conductive polymer has a thickness of 1 to 2000 nm.
6. The anti-reflection film for plasma display front panel as stated in any one of 1 to 4, wherein the conductive layer comprising a conductive polymer has a thickness of 5 to 300 nm.
7. A process for producing the anti-reflection film for plasma display front panel, comprising producing the anti-reflection film for plasma display front panel of any one of claims 1 to 6 having a conductive layer comprising a conductive polymer on at least one surface of a substrate, wherein a surface of a substrate or a laminate on which the conductive layer is to be formed is coated with an oxidizing agent, and a monomer is brought into contact with the oxidizing agent to perform gas phase polymerization and thereby form a conductive layer comprising a conductive polymer on the surface of the substrate or the laminate.

### BRIEF DESCRIPTION OF THE DRAWINGS

Fig. 1 is a sectional view of an anti-reflection film of the present invention (embodiment 1).
Fig. 2 is a sectional view of an anti-reflection film of the present invention (embodiment 2).
Fig. 3 is a sectional view of an anti-reflection film of the present invention (embodiment 3).
Fig. 4 is a sectional view of an anti-reflection film of the present invention (embodiment 4).
Fig. 5 is a chart of reflectance to explain interference vibration properties.

### DETAILED DESCRIPTION OF THE INVENTION

Materials for forming layers of the anti-reflection film for plasma display front panel according to the invention and an embodiment of the process for producing the anti-reflection film are described in detail hereinafter.

### 1. Substrate

Although the material of the substrate used in the invention is not specifically restricted, there can be mentioned substrates made of, for example, polyester resin, triacetyl cellulose resin, polycarbonate resin, allyl carbonate resin, polyether sulfone resin, polyacrylate resin, cycloolefin resin and acrylic styrene resin.

By the use of such substrates, not only anti-reflection effect but also excellent resistance to scratching and transparency can be obtained in the wide application fields of anti-reflection films such as fields of camera lenses, image display parts of televisions (CRT), polarizing plates of liquid crystal display devices, and plasma displays. Moreover, excellent mechanical strength and durability can be obtained.

The substrate may have been subjected to various surface treatments, such as corona discharge treatment. The form of the substrate is not restricted at all, but taking mass production capability into consideration, a substrate in the form of a roll is preferable. The substrate may contain various additives, for example, colorants such as dyes and pigments, ultraviolet light absorbers and antioxidants.

### 2. Hard coating layer

The material to constitute the hard coating layer is not specifically restricted either, and examples of the materials include siloxane resin, acrylic resin, melamine resin and epoxy resin. These resins can be used singly or in combination of two or more kinds. A dispersion wherein fine particles of an inorganic oxide such as silica are dispersed in the above resin is also preferably employed.

A hard coating layer having been subjected to antiglare treatment can be also employed without any problem.

The thickness of the hard coating layer is preferably in the range of 0.1 to 50 µm. If the thickness of the hard coating layer is less than 0.1 µm, it sometimes becomes difficult to firmly fix the high-refractive index layer. On the other hand, a hard coating layer having a thickness of more than 50 µm is sometimes difficult to produce, or when such a hard coating layer is used for films, flexing properties are sometimes lowered.

Therefore, the thickness of the hard coating layer is desired to be in the range of 0.1 to 50 µm, preferably 0.5 to 30 µm, more preferably 1 to 20 µm.

### 3. Low-refractive index layer

The low-refractive index layer has a refractive index (Na-D ray refractive index, measuring temperature: 25°C) of 1.35 to 1.50.

If the refractive index of the low-refractive index layer is less than 1.35, the kinds of the materials employable are excessively restricted. On the other hand, if the refractive index exceeds 1.5, anti-reflection effect is sometimes lowered when the low-refractive index layer is combined with a high-refractive index layer.

Therefore, the refractive index of the low-refractive index layer is desired to be in the range of 1.35 to 1.50, preferably 1.35 to 1.45, more preferably 1.35 to 1.42.

When a difference in the refractive index between the low-refractive index layer and the high-refractive index layer is made not less than 0.05, more excellent anti-reflection effect is obtained. If the difference in the refractive index between the low-refractive index layer and the high-refractive index layer is less than 0.05, synergistic effect of these layers in the anti-reflection film is not obtained, and the anti-reflection effect is rather lowered in some cases.

Therefore, the difference in the refractive index between the low-refractive index layer and the high-refractive index layer is desired to be not less than 0.05, preferably 0.1 to 0.5, more preferably 0.15 to 0.5.

The thickness of the low-refractive index layer is not specifically restricted, but for example, it is preferably in the range of 0.05 to 1 µm.

If the thickness of the low-refractive index layer is less than 0.05 µm, adhesion strength of the low-refractive index layer to the high-refractive index layer as a base is sometimes lowered, or resistance to scratching is sometimes lowered. On the other hand, a low-refractive index layer having a thickness of more than 1 µm is difficult to uniformly form, and besides, light transmittance and resistance to scratching are sometimes lowered.

Therefore, the thickness of the low-refractive index layer is desired to be in the range of 0.05 to 1 µm, preferably 0.05 to 0.5 µm, more preferably 0.05 to 0.3 µm.

The thickness of the low-refractive index layer is defined as an average of practically measured values (10 points) from a transmission electron microscope photograph of a section of a slice of the layer. In case of a layer (coating film) having an uneven lower surface, the thickness is defined as a distance between average lines of roughness curves (measured length: 1 µm) defined by JIS B0601.

The low-refractive index layer can be formed by the use of, for example, a curing composition for forming a low-refractive index layer. The curing composition for forming a low-refractive index layer is, for example, a composition obtained by dispersing, in a thermosetting or ultraviolet curing resin binder, one or more kinds of low-refractive index material fine powders (average particle diameter: 0.3 - 200 nm, preferably 0.5 - 100 nm) selected from magnesium fluoride (refractive index: 1.38), silicon oxide (refractive index: 1.46), aluminum fluoride (refractive index: 1.33 - 1.39), calcium fluoride (refractive index: 1.44), lithium fluoride (refractive index: 1.36 - 1.37), sodium fluoride (refractive index: 1.32 - 1.34) and thorium fluoride (refractive index: 1.45 -1.5) .

The resin binder is appropriately selected from polyester resin, acrylic resin, vinyl resin, polycarbonate resin, polyolefin resin, polyurethane resin, melamine resin, epoxy resin, polyamide resin, alkyd resin, vinyl chloride resin, fluororesin, silicon resin and the like.

Further, a composition containing a fluorine type polymer is also preferably employed.

### 4. High-refractive index layer

The high-refractive index layer has a refractive index (Na-D ray refractive index, measuring temperature: 25°C) of 1.45 to 2.1.

If the refractive index of the high-refractive index layer is less than 1.45, anti-reflection effect is sometimes markedly lowered when the high-refractive index layer is combined with the low-refractive index layer.
On the other hand, if the refractive index exceeds 2.1, the kinds of the materials employable are excessively restricted.

Therefore, the refractive index of the high-refractive index layer is desired to be in the range of 1.45 to 2.1, preferably 1.55 to 2.0, more preferably 1.6 to 1.9.

The thickness of the high-refractive index layer is not specifically restricted, but for example, it is preferably in the range of 0.05 to 30 µm.

If the thickness of the high-refractive index layer is less than 0.05 µm, anti-reflection effect and adhesion strength to the substrate are sometimes lowered when the high-refractive index layer is combined with the low-refractive index layer. On the other hand, in case of a high-refractive index layer having a thickness of more than 30 µm, it sometimes becomes difficult to uniformly form a non-continuous high-refractive index layer.

Therefore, the thickness of the high-refractive index layer is desired to be in the range of 0.05 to 30 µm, preferably 0.05 to 5 µm, more preferably 0.06 to 0.5 µm.

Similarly to the low-refractive index layer, the thickness of the low-refractive index layer is defined as an average of practically measured values (10 points) from a transmission electron microscope photograph of a section of a slice of the layer. In case of a layer (coating film) having an uneven lower surface, the thickness is defined as a distance between average lines of roughness curves (measured length: 1 µm) defined by JIS B0601.

In the case where the high-refractive index layer is a non-continuous layer in which holes or slits are formed in a part of the flat layer but which has substantially even lower and upper surfaces, the thickness of the high-refractive index layer means a vertical distance between the lower surface and the upper surface (sectional height).

The high-refractive index layer can be formed by the use of, for example, a curing composition for forming a high-refractive index layer. The curing composition for forming a high-refractive index layer is, for example, a thermosetting or ultraviolet curing composition obtained by dispersing, in a binder resin, a high-refractive index material fine powder (average particle diameter: 0.3 - 200 nm, preferably 0.5 - 100 nm) selected from cerium oxide (refractive index: 2.2 - 2.5), zinc sulfide (refractive index: 2.2 - 2.3), titanium oxide (refractive index: 2.2 - 2.7), zirconium oxide (refractive index: 1.95 - 2.0) and aluminum oxide (refractive index: 1.59 - 1.62) .

Examples of the binder resins include the same resins as previously described for the composition for forming the low-refractive index layer.

### 5. Conductive layer

As the conductive polymer for use in the invention, polythiophene or its derivative is preferable from the viewpoints of transparency and color tone. More specifically, a homopolymer or a copolymer obtained by polymerizing thiophene or a thiophene derivative is preferable, and such polymers are publicly known (see, for example, Japanese Patent Laid-Open Publication No. 90060/1995). Of these, polythiophene or poly(3,4-ethylenedioxythiophene) is particularly preferably employed.

The conductive layer comprising such a conductive polymer can be formed by coating a substrate or a laminate with a coating dispersion of the conductive polymer. When the conductive layer is formed by gas phase polymerization as described below, the resulting conductive layer exhibits excellent adhesion to the substrate.

The conductive layer formed by the gas phase polymerization is obtainable as a thin film and is excellent in the adhesion to the substrate, transparency and controllability of the film thickness. Therefore, the gas phase polymerization is particularly preferably employed. The term "gas phase polymerization" used herein means a process comprising applying an oxidizing agent to a surface of a substrate in a thickness of the order of several µm and bringing a monomer in a gas state into contact with the oxidizing agent to promote polymerization and thereby form a conductive polymer film on the substrate.

Such a conductive layer can be prepared by a process described in Japanese Patent Laid-Open Publication No. 82105/2003.

The type of the oxidizing agent for use in the invention should not be restricted, but halides of transition metals, transition metal salts having strong acid residual group such as perchloric acid, per acids such as peroxo acid and their salts, etc. are employed. Of these, CuCl₃, FeCl₃, iron(III) toluenesulfonate, iron(III) perchlorate, Cu (ClO₄)₂6H₂O, (NH₄)₂S₂O₈ are particularly preferable. The oxidizing agent is dissolved in an organic solvent prior to use.

The organic solvent for use in the invention is selected from methyl alcohol, 2-butyl alcohol, ethyl cellosolve, ethyl alcohol, cyclohexane, acetone, ethyl acetate, toluene and methyl ethyl ketone. These organic solvents can be used singly or in combination of two to four kinds. For example, an organic solvent obtained by mixing methyl alcohol, 2-butyl alcohol and ethyl cellosolve in a mixing ratio of 7:2:1, 6:2:2, 6:3:1 or 5:3:2 is employed.

In coating of the substrate with the oxidizing agent, it is also possible to use a high-molecular weight substance, such as polyurethane, polyvinyl chloride, polyvinyl alcohol, methyl cellulose or chitosan, in combination with the organic solvent to enhance the adhesion strength.

For forming the conductive layer comprising a conductive polymer by polymerizing the above-mentioned monomer on the substrate having been coated with the oxidizing agent, the monomer is subjected to gas phase polymerization, and in the gas phase polymerization, the reaction temperature is preferably in the range of 0 to 100°C.

More specifically, in the first step, the surface of the substrate is coated with the oxidizing agent of 0.5 to 10% by weight in a thickness of the order of several µm. The solvent conditions vary depending upon the type of the substrate used, and usually, a mixture of two or more kinds of organic solvents is employed. The substrate having been coated with the oxidizing agent is dried by a hot air dryer at a temperature of not higher than 80°C, taking decomposition of the oxidizing agent into consideration.

In the second step, a monomer selected from the group consisting of pyrrole, thiophene, furan, selenophene, 3,4-ethylenedioxythiophene and their derivatives is vaporized and brought into contact with the substrate having been coated with the oxidizing agent to perform polymerization reaction on the surface of the substrate. Examples of methods to vaporize the monomer include a method of distilling the monomer at a temperature of 0 to 100°C in a closed chamber and a CVD (chemical vapor deposition) method. In the polymerization reaction, it is preferable to control the temperature conditions and the reaction time, and the polymerization reaction is carried out for about 10 seconds to 40 minutes. Although the polymerization time varies depending upon the type of the monomer used, the polymerization reaction is generally carried out until a thickness and a surface resistance of target values are reached.

In the third step, that is, after the polymerization is completed, washing is carried out to remove the unreacted monomer and the oxidizing agent. As a solvent for the washing, an alcohol such as methanol is usually used, and in some cases, water may be used.

A series of the above steps can be carried out batchwise or continuously, and the operations from the polymerization of the monomer to the formation of the conductive layer can be carried out as a series of the operations. The resulting conductive polymer film has a pencil hardness of about 1H to 3H, has excellent adhesion to the substrate and exhibits satisfactory resistance to alcohol solvents.

The thickness of the conductive layer is preferably in the range of 1 to 2000 nm. If the thickness is less than 1 nm, pinholes or the like are liable to occur, and hence, film formation becomes difficult. Further, the surface resistance is increased and the antistatic properties are deteriorated. If the thickness exceeds 2000 nm, transparency and color tone are markedly deteriorated though the surface resistance is good, and such a layer cannot be used for an anti-reflection film. A particularly preferable thickness is in the range of 5 to 300 nm from the viewpoint of a balance between transparency, color tone and surface resistance.

The surface resistance of the conductive layer is in the range of 10² Ω/□ to 10⁸ Ω/□.

### 6. Anti-reflection film for plasma display front panel

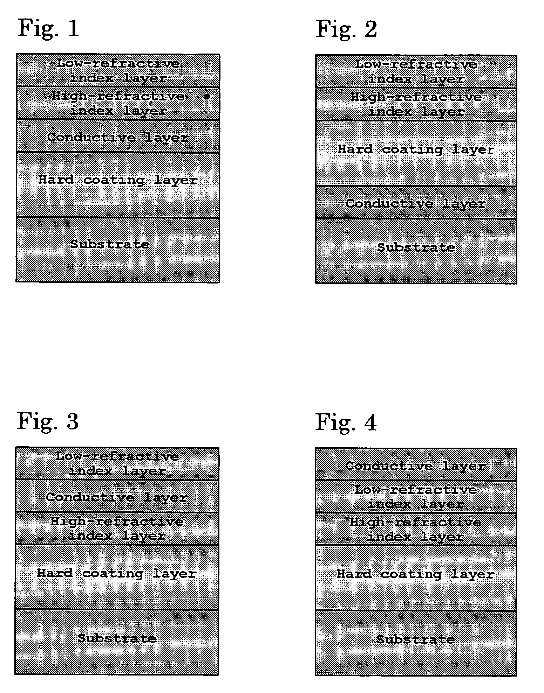

Examples of sections of the anti-reflection films for plasma display front panel according to the invention are shown in Fig. 1 to Fig. 4. The anti-reflection film may have a laminated structure of substrate/hard coating layer/conductive layer, substrate/conductive layer/hard coating layer, or the like.

In the anti-reflection film, the hard coating layer, the conductive layer, the high-refractive index layer and the low-refractive index layer may be provided on the upper surface of the substrate or the lower surface thereof, or may be provided on both surfaces.

An anti-reflection film having a hard coating layer and a conductive layer comprising a conductive polymer formed by gas phase polymerization on the upper or the lower surface or both surfaces of the substrate is useful as an antistatic film.

An anti-reflection film having at least a hard coating layer, a high-refractive index layer having a refractive index of 1.45 to 2.1 and a low-refractive index layer having a refractive index of 1.35 to 1.5 which are laminated in this order on at least one surface of the substrate and having a conductive layer comprising a conductive polymer between the hard coating layer and the high-refractive index layer or between the substrate and the hard coating layer is excellent in the antistatic properties and the anti-reflection properties.

In the anti-reflection film of the invention, it is possible to appropriately provide a medium-refractive index layer, a protective layer, an adhesive layer or the like on at least one surface of each layer, when needed. In the present invention, functions other than the anti-reflection function and the antistatic function are not restricted at all, and a near infrared ray shielding layer, an electromagnetic wave shielding layer, a color tone correction layer and the like can be provided when needed. As the near infrared ray shielding layer or the color tone correction layer, a transparent resin film containing a dye or a pigment, such as a phthalocyanine dye or a metal complex, or a substrate in which such dye or pigment is dispersed is known. As the electromagnetic wave shielding layer, a lattice-like conductor such as a metal mesh, a multi-layer film consisting of silver and a metal oxide, an ITO film or the like is known.

The anti-reflection film for plasma display front panel according to the invention has a surface resistance of 10⁶ Ω/□ to 10¹² Ω/□ and a total light transmittance of not less than 80%.

### 7. Process for producing anti-reflection film for plasma display front panel

For producing the anti-reflection film of the invention, the hard coating layer, the conductive layer comprising a conductive polymer, the high-refractive index layer and the low-refractive index layer have only to be formed in an arbitrary order on a surface of the substrate, and formation of each layer is as described above.

Of the above layers, the conductive layer comprising a conductive polymer is preferably formed by applying an oxidizing agent onto a surface of a substrate or a laminate (e.g., laminate of substrate and hard coating layer) where the conductive layer is to be formed and bringing a monomer in a gas state into contact with the oxidizing agent to perform gas phase polymerization, as described above.

### EFFECT OF THE INVENTION

The anti-reflection film for plasma display front panel according to the present invention has excellent anti-reflection properties and is excellent in transparency, near infrared ray shielding properties, color tone correction properties and antistatic properties.

When a conductive layer comprising a conductive polymer is formed by gas phase polymerization, an anti-reflection film having excellent adhesion between the conductive layer and the substrate can be obtained.

### EXAMPLES

The present invention is further described with reference to the following examples, but it should be construed that the invention is in no way limited to those examples.

In the following examples, the unit of the amount of each component is "part(s) by weight" unless otherwise stated.

### Synthesis Example (Preparation of catalyst solution)

In a mixed solvent consisting of methyl alcohol, 2-butyl alcohol and ethyl cellosolve in a ratio of 6:3:1 (methyl alcohol:2-butyl alcohol:ethyl cellosolve), 3% by weight of FeCl₃ as an oxidizing agent was dissolved to prepare a catalyst solution.

### Example 1

A polyester film A4300 (available from Toyobo Co., Ltd., film thickness: 100 µm) was coated with "Desolite Z7501" (available from JSR Co., Ltd.) as a hard coating agent, and the coating agent was dried in an oven under the conditions of 80°C and 1 minute to form a coating film. Then, the coating film was subjected to ultraviolet curing in the atmosphere by the use of a metal halide lamp under the conditions of 0.3 J/cm² to form a hard coating layer having a thickness of 3 µm.

The polyester film having the hard coating layer was coated with the catalyst solution prepared in Synthesis Example by spin coating, followed by drying at a temperature of 60°C for 3 minutes. The color of the polyester film coated with the catalyst solution or the polyester film having the hard coating layer was light yellow.

Then, the polyester film having the hard coating layer and the catalyst coating film was placed in a CVD chamber designed so as to form a saturated 3,4-ethylenedioxythiophene monomer, and the substrate having been coated with the catalyst solution was subjected to reaction for 30 seconds. Thereafter, the polyester film was washed with a methanol solvent to remove the unreacted substance, whereby a conductive layer was formed.

Then, the conductive layer was coated with "Desolite KZ7987B" (available from JSR Co., Ltd.) as a curing composition for forming a high-refractive index layer by the use of a wire bar coater, and the composition was dried in an oven under the conditions of 80°C and 1 minute to form a coating film. Then, the coating film was subjected to ultraviolet curing in the atmosphere by the use of a metal halide lamp under the conditions of 0.3 J/cm² to form a high-refractive index layer having a thickness of 0.1 µm.

Further, the high-refractive index layer was coated with "Opstar JN7215" (available from JSR Co., Ltd.) as a curing composition for forming a low-refractive index layer by the use of a wire bar coater, and the composition was air dried at room temperature for 5 minutes to form a coating film. Then, the coating film was heated in an oven under the conditions of 140°C and 1 minute to form a low-refractive index layer having a thickness of 0.1 µm.

### Adhesion properties of conductive layer

Adhesion properties of the conductive layer formed on the substrate were evaluated in accordance with the cross-cut cellophane tape peel test of JIS K5400, that is, the adhesion properties were evaluated by a residual film ratio (%) to the total 100 squares (each square: 1 mm²). The result is set forth in Table 1.

### Evaluation of anti-reflection film

The resulting anti-reflection film was measured on the reflectance, total light transmittance, turbidity (haze value), yellowness (b*) and surface resistance by the following measuring methods.

### (1) Reflectance and total light transmittance

The reflectance (minimum reflectance at the measuring wavelength) and the total light transmittance of the resulting anti-reflection film were measured by a spectral reflectance measuring device (autographic recording spectrophotometer U-3410 incorporated with large sample room integrating sphere attachment 150-09090, manufactured by Hitachi, Ltd.) in accordance with JIS K7105 (measuring method A). That is to say, the reflectance and the total light transmittance at the central point of interference vibration in the vicinity of 550 nm were measured and evaluated using a reflectance of an aluminum deposition film as a reference (100%). The results are set forth in Table 1.

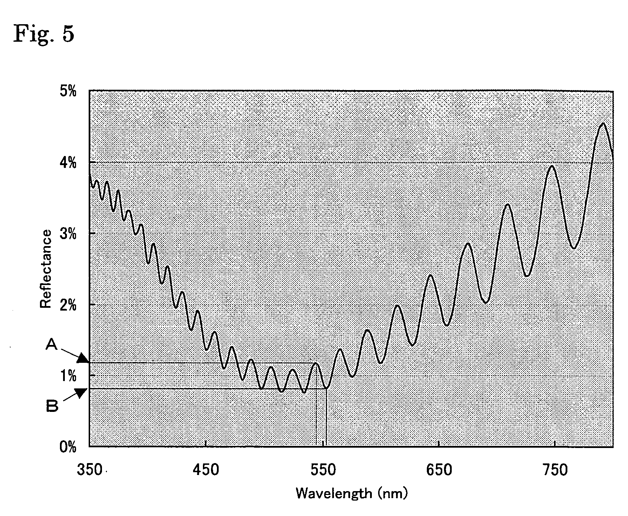

The interference vibration properties are defined as follows. When the maximum reflectance and the minimum reflectance in the vicinity of 550 nm are taken as A and B, respectively, the interference vibration properties C are represented by A/B (C = A/B). The result is set forth in Table 1. In case of, for example, Fig. 5, A = 1.1% and B = 0.8%, and consequently, C = 1.4. As the value C is smaller, glare becomes lower, and the anti-reflection properties become more excellent.

### (2) Turbidity (haze value) and yellowness (b*)

The haze value and the yellowness (b*) of the resulting anti-reflection film were measured in accordance with ASTM D1003 using a color haze meter (manufactured by Suga Seisakusho K.K.). The results are set forth in Table 1.

### (3) Surface resistance

The surface resistance of the resulting anti-reflection film was measured using a high resistance meter (HP4339 manufactured by Hewlett Packard Co.) and "Loresta EP" (manufactured by Mitsubishi Chemical Co.). The result is set forth in Table 1.

### Example 2

An anti-reflection film having a film structure of Fig. 2 was prepared, and the reflectance, surface resistance, etc. of the anti-reflection film were evaluated. The results are set forth in Table 1. For the conductive layer, poly(3,4-ethylenedioxythiophene) was used.

### Example 3

An anti-reflection film having a film structure of Fig. 3 was prepared using, as a conductive layer, a layer formed by spin coating with aqueous dispersion of poly(3,4-ethylenedioxythiophene) "Baytron P" (available from Bayer), and the reflectance, surface resistance, etc. of the anti-reflection film were evaluated. The results are set forth in Table 1.

### Example 4

An anti-reflection film having a film structure of Fig. 4 was prepared, and the reflectance, surface resistance, etc. of the anti-reflection film were evaluated. The results are set forth in Table 1. As the conductive layer, a layer formed by spin coating with "Baytron P" was used, similarly to Example 3.

### Comparative Example 1

An anti-reflection film having no conductive layer was prepared as shown in Table 1, and the reflectance, surface resistance, etc. of the anti-reflection film were evaluated. The results are set forth in Table 1.

**Table 1**

| | Ex.1 | Ex.2 | Ex.3 | Ex.4 | Comp. |
|---|---|---|---|---|---|
| Thickness of low-refractive index layer (µm) | 0.1 | 0.1 | 0.1 | 0.1 | 0.1 |
| Thickness of high-refractive index layer (µm) | 0.1 | 0.1 | 0.1 | 0.1 | 0.1 |
| Thickness of hard coating layer (µm) | 3.0 | 3.0 | 3.0 | 3.0 | 3.0 |
| Thickness of conductive layer (nm) | 80 | 55 | 65 | 70 | none |
| Adhesion properties of conductive layer (%) | 100 | 100 | 82 | 80 | none |
| Refractive index of low-refractive index layer | 1.43 | 1.43 | 1.43 | 1.43 | 1.43 |
| Refractive index of high-refractive index layer | 1.65 | 1.65 | 1.65 | 1.65 | 1.65 |
| Reflectance (%) | 0.8 | 0.7 | 0.9 | 0.8 | 0.9 |
| Interference vibration properties | 1.2 | 1.4 | 1.5 | 1.3 | 3.4 |
| Total light transmittance (%) | 92 | 93 | 85 | 82 | 89 |
| Haze (%) | 1.0 | 1.0 | 0.9 | 0.9 | 1.0 |
| Yellowness b* | -1.6 | -1.2 | -1.4 | -1.8 | 0.90 |
| Surface resistance (Ω/□) | 10⁶ | 10⁸ | 10¹⁰ | 10⁹ | 10¹⁶ |

Disclosed is an anti-reflection film for plasma display front panel, having a hard coating layer, a conductive layer comprising a conductive polymer, a high-refractive index layer and a low-refractive index layer, which are provided in an arbitrary order on at least one surface of a substrate. Also disclosed is a process for producing the anti-reflection film, comprising forming a conductive layer comprising a conductive polymer on a surface of a substrate by gas phase polymerization of a monomer such as thiophene. The anti-reflection film for plasma display front panel of the invention has excellent anti-reflection properties and is excellent in transparency, near infrared ray shielding properties, color tone correction properties and antistatic properties. The process of the invention can produce an anti-reflection film for plasma display front panel having excellent adhesion between the substrate and the conductive layer.

## Claims

1. An anti-reflection film for plasma display front panel, having a hard coating layer and a conductive layer comprising a conductive polymer on at least one surface of a substrate.

2. An anti-reflection film for plasma display front panel, having a hard coating layer, a conductive layer comprising a conductive polymer, a high-refractive index layer and a low-refractive index layer, which are provided in an arbitrary order on at least one surface of a substrate.

3. The anti-reflection film for plasma display front panel as claimed in claim 1 or 2, wherein the conductive polymer is polythiophene or its derivative.

4. The anti-reflection film for plasma display front panel as claimed in any one of claims 1 to 3, wherein the conductive polymer is polythiophene obtained by gas phase polymerization or its derivative.

5. The anti-reflection film for plasma display front panel as claimed in any one of claims 1 to 4, wherein the conductive layer comprising a conductive polymer has a thickness of 1 to 2000 nm.

6. The anti-reflection film for plasma display front panel as claimed in any one of claims 1 to 4, wherein the conductive layer comprising a conductive polymer has a thickness of 5 to 300 nm.

7. A process for producing the anti-reflection film for plasma display front panel, comprising producing the anti-reflection film for plasma display front panel of any one of claims 1 to 6 having a conductive layer comprising a conductive polymer on at least one surface of a substrate, wherein a surface of a substrate or a laminate on which the conductive layer is to be formed is coated with an oxidizing agent, and a monomer is brought into contact with the oxidizing agent to perform gas phase polymerization and thereby form a conductive layer comprising a conductive polymer on the surface of the substrate or the laminate.
